# EUROPÄISCHE PATENTSCHRIFT

(11) **EP 0 626 047 B1**
(45) Veröffentlichungstag und Bekanntmachung des Hinweises auf die Patenterteilung: **24.04.1996**
(21) Anmeldenummer: 93903977.2
(22) Anmeldetag: 16.02.1993
(51) Int. Cl.: F16H 57/02, F16B 11/00, F16D 1/06

(54) **KLEBEVERBINDUNG, INSBESONDERE EINE DREHFESTE VERBINDUNG ZWEIER ZAHNRÄDER MIT EINER WELLE**
BONDED JOINT, IN PARTICULAR A JOINT ROTATIONALLY SECURING TWO TOOTHED WHEELS TO A SHAFT
ASSEMBLAGE COLLE, NOTAMMENT UN ASSEMBLAGE DE DEUX ROUES DENTES SOLIDAIRE EN ROTATION D'UN ARBRE

(30) Priorität: 18.02.1992 DE 4204814
(43) Veröffentlichungstag der Anmeldung: 30.11.1994
(73) Patentinhaber: ZF FRIEDRICHSHAFEN Aktiengesellschaft, D-88038 Friedrichshafen (DE)
(72) Erfinder: RAAB, Rudolf, D-7992 Tettnang (DE)
(86) Internationale Anmeldenummer: EP9300365
(87) Internationale Veröffentlichungsnummer: WO9316302

(56) Entgegenhaltungen:
- FR-A- 2 109 232
- FR-A- 2 651 282
- KONSTRUKTION Bd. 40, Nr. 1, Januar 1988, BERLIN Seiten 19 - 24 A. GRUNAU 'Schwingfestigkeit geklebter Welle-Nabe-Verbindungen'

## Beschreibung

Die Erfindung bezieht sich auf eine Klebeverbindung zwischen mindestens drei Maschinenelementen. Vorzugsweise handelt es sich um eine drehfeste Verbindung zweier Zahnräder mit einer Welle, wie sie beispielsweise in Getrieben vorkommt.

Zur drehfesten Verbindung mehrerer Maschinenelemente miteinander sind mehrere konstruktive Ausführungsformen bekanntgeworden. Eine einfache, wenn auch wenig belastbare, Lösung besteht in einer Nut- und Feder-Verbindung. Es ist ferner bekannt, Zahnräder über ein Keilwellenprofil mit einer Vorgelegewelle zu verbinden. Diese Lösung ist jedoch relativ teuer. Bei Getrieben ist es gebräuchlich, die Zahnräder auf die Vorgelegewelle aufzuschrumpfen. Um eine hoch belastbare drehfeste Verbindung zwischen den Zahnrädern und der Vorgelegewelle zu erreichen, muß mit großen Übermaßen gearbeitet werden. Bei der Fertigung werden die Zahnräder auf hohe Temperaturen erhitzt, um beim Abkühlen auf die Vorgelegewelle mit hoher Pressung aufzuschrumpfen. Nachteilig ist hierbei insbesondere, daß in den Zahnrädern hohe Restspannungen, insbesondere hohe Fußspannungen, vorhanden sind. Diese hohen Restspannungen können sich nachteilig auf die Lebensdauer dieser Maschinenelemente auswirken.

Die FR-A 2 651 282 zeigt eine Klebeverbindung zwischen einem Zahnrad und einer Welle. Die Klebefläche entspricht der Mantelfläche eines Kegelstumpfes. Um einen axialen Versatz der miteinander zu verklebenden Bauteile zu vermeiden, müssen enge Fertigungstoleranzen eingehalten werden, was die Herstellung zusätzlich verteuert.

Der vorliegenden Erfindung liegt die Aufgabe zugrunde, eine drehfeste Verbindung zweier Zahnräder mit einer Welle zu schaffen, die die Nachteile einer hohen Restspannung vermeidet und hochbelastbar ist.

Die Erfindung löst die gestellte Aufgabe durch eine Klebeverbindung, an der zwei Zahnräder und eine Welle beteiligt sind. Hierbei ist die Summe der beteiligten Klebeflächen größer als die direkte Kontaktfläche zwischen der Welle und mindestens einem Zahnrad. Anstelle einer Klebeverbindung, bei der die Zahnräder einzeln - mit einer relativ kurzen axialen Klebelänge - mit der Vorgelegewelle verbunden werden, wird bei der erfindungsgemäßen Lösung eine Verbundklebung vorgeschlagen. Diese Verbundklebung ergibt eine deutliche Steigerung der Summe der beteiligten Klebeflächen. Hierdurch ist eine bemerkenswerte Steigerung der Haltbarkeit bzw. Belastbarkeit möglich. Der besondere Vorteil der vorgeschlagenen Klebeverbindung besteht darin, daß die einzelnen Maschinenelemente mit sogenannten Übergangspassungen zusammengefügt werden und demzufolge keine unerwünscht hohen Restspannungen auftreten.

Es ist vorteilhaft, eine der Klebeflächen durch ineinandergreifende, rohrförmige Abschnitte der Zahnräder zu bilden. Auf diese Weise ist eine fertigungstechnisch einfache Erhöhung der beteiligten Klebeflächen möglich.

Bei einer möglichen konstruktiven Lösung weist ein mit der Welle verklebtes Zahnrad einen rohrförmigen Abschnitt auf, mit dem das andere Zahnrad verklebt ist. Es ist vorteilhaft, wenn das Zahnrad mit der höheren Belastung diesen rohrförmigen Abschnitt aufweist. Für das geringer belastete Zahnrad kann eine Klebelänge ausreichend sein, die der Breite dieses Zahnrads entspricht.

Eine weitere vorteilhafte Ausgestaltung, bei der ebenfalls eine große Klebefläche erzielbar ist, zeichnet sich dadurch aus, daß beide Zahnräder unmittelbar mit der Welle verklebt sind. Die Klebefläche wird durch ineinandergreifende, rohrförmige Abschnitte der Zahnräder vergrößert.

Um geometrisch einfache Formen für die Zahnräder zu erhalten, kann es vorteilhaft sein, unterschiedlich große Wellendurchmesser zu verwenden, so daß ein Teil der Klebefläche auf verschieden großen Durchmessern dieser Welle liegt.

Um hohe Restspannungen zu vermeiden, ist es sehr vorteilhaft, die Maschinenelemente mit Übergangspassungen zusammenzufügen.

Weitere Einzelheiten der Erfindung sowie die daraus resultierenden Vorteile sind der nachfolgenden Beschreibung mehrerer Ausführungsbeispiele anhand der Zeichnungen zu entnehmen.
Es zeigen:
- Fig. 1: eine erste Klebeverbindung zwischen drei Maschinenelementen und
- Fig. 2 und 3: konstruktive Varianten der Klebeverbindung nach Fig. 1.

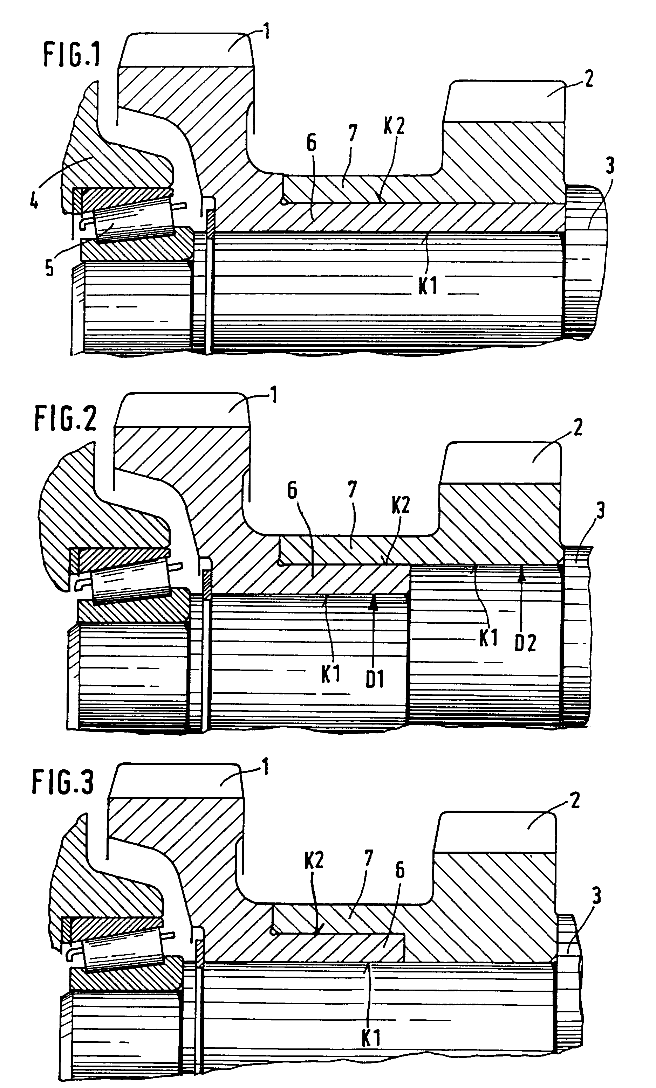

In Fig. 1 ist im Längsschnitt die Verbindung zwischen mindestens drei Maschinenelementen vereinfacht dargestellt. Es handelt sich um eine Klebeverbindung zweier Zahnräder 1 und 2 mit einer Welle 3.

Bei dem Zahnrad 1 kann es sich beispielsweise um das Konstantrad und bei dem Zahnrad 2 um das nachfolgende Gangrad und bei der Welle 3 um eine Vorgelegewelle eines Pkw-Getriebes handeln. Die Welle 3 ist innerhalb eines Getriebegehäuses 4 drehbar gelagert. Eines der zur Anwendung gelangenden Wälzlagers ist, wie aus der Zeichnung ersichtlich, als Kegelrollenlager 5 ausgebildet.

An der Klebeverbindung sind beide Zahnräder 1 und 2 sowie die Welle 3 beteiligt. Um eine große Klebefläche zu erzielen, weist zumindest eines der Zahnräder 1 oder 2 einen rohrförmigen Abschnitt 6 auf. Bei dem Ausführungsbeispiel nach Fig. 1 weist das Zahnrad 2 ebenfalls einen rohrförmigen Abschnitt 7 auf. Wie aus der Zeichnung ohne weiteres ersichtlich, wird die an der Klebeverbindung insgesamt beteiligte (zylinderförmige) Klebefläche aus der Summe der (zylinderförmigen) Klebefläche des Zahnrads 1 mit der Welle 3, die mit K1 bezeichnet ist, und der (zylinderförmigen) Klebefläche des Zahnrads 2 mit dem rohrförmigen Abschnitt 6 des Zahnrads 1, die mit K2 bezeichnet ist, gebildet. Die Summe der beteiligten Klebeflächen K1 + K2 ist demzufolge größer als die direkte Kontaktfläche zwischen der Welle 3 und dem Zahnrad 1. Die Klebeverbindung wird unter Verwendung eines geeigneten Fügestoffs erzielt, wobei die Maschinenelemente 1, 2 und 3 im Bereich der Klebeflächen mit Übergangspassungen ineinandergreifen.

Als Fügestoff kommt die Verwendung eines Ein- oder Zwei-Komponenten-Klebers in Frage. Im Einzelfall wird der Fachmann aus der Vielzahl der bekannten Fügestoffe den geeignetsten auswählen. Unter den Begriff Übergangspassung fallen insbesondere folgende Paßmaße:

Die Bohrungen sind mit Paßmaß H7 gefertigt. Die Außen- bzw. Wellendurchmesser sind mit den Paßmaßen j6, k6 und n6 gefertigt. Die Paßmaßpaarung H7/j6 ergibt einen Schiebesitz, bei der Paarung H7/k6 stellt sich Haftsitz ein, während die Paarung H7/n6 einen Festsitz ergibt.

Hinsichtlich der konstruktiven Ausgestaltung kann es ausreichend sein, lediglich ein Zahnrad 1 oder 2 mit einem rohrförmigen Abschnitt 6 oder 7 zu versehen. Hierbei handelt es sich um das höher belastete Zahnrad. Es kann ausreichend sein, das verbleibende Zahnrad auf einer Klebelänge, die der Breite dieses Zahnrads entspricht, mit dem rohrförmigen Abschnitt zu verkleben. Eine besonders hoch belastbare Klebeverbindung wird erreicht, wenn beide Zahnräder rohrförmige Abschnitte 6 und 7 aufweisen.

Bei dem Ausführungsbeispiel nach Fig. 2 sind beide Zahnräder 1 und 2 mit der Welle 3 verklebt. Die Klebefläche K1 liegt auf einem ersten Durchmesser D1, während die Klebefläche K2 teilweise auf dem rohrförmigen Abschnitt 6 und einem größeren Durchmesser D2 der Welle 3 liegt. Auch bei dieser Verbindung ist die Summe der beteiligten Klebeflächen K1 und K2 größer als die direkte Kontaktfläche zwischen der Welle 3 und den Zahnrädern 1 und 2.

Bei der Variante nach Fig. 3 weisen die Bohrungen der Zahnräder 1 und 2 den gleichen Innendurchmesser auf. Beide Zahnräder 1 und 2 sind unmittelbar mit der Welle 3 verklebt. Es stellt sich die Klebefläche K1 ein. Hierzu addiert sich die Klebefläche K2, die sich zwischen den rohrförmigen Abschnitten 6 und 7 der Zahnräder 1 und 2 befindet.

Sämtliche Klebeverbindungen zeichnen sich durch eine hohe Festigkeit aus. Durch die Verwendung von Übergangspassungen lassen sich hohe Restspannungen in den Zahnrädern 1 und 2 völlig vermeiden.

## Patentansprüche

1. Klebeverbindung zwischen mindestens drei Maschinenelementen (1, 2, 3), insbesondere eine drehfeste Verbindung zweier Zahnräder (1, 2) mit einer Welle (3), dadurch **gekennzeichnet**, daß an der Klebeverbindung zwei Zahnräder (1, 2) und eine Welle (3) beteiligt sind, wobei die Summe der beteiligten Klebeflächen (K1, K2) größer als die direkte Kontaktfläche zwischen der Welle (3) und mindestens einem Zahnrad (1 bzw. 2) ist.

2. Klebeverbindung nach Anspruch 1, dadurch **gekennzeichnet**, daß eine der Klebeflächen (K2) durch ineinandergreifende rohrförmige Abschnitte der Zahnräder (1, 2) gebildet sind.

3. Klebeverbindung nach Anspruch 1, dadurch **gekennzeichnet**, daß ein mit der Welle (3) verklebtes Zahnrad (1) einen rohrförmigen Abschnitt (6) aufweist, mit dem das andere Zahnrad (2) verklebt ist.

4. Klebeverbindung nach den Ansprüchen 1 und 2, dadurch **gekennzeichnet**, daß beide Zahnräder (1, 2) unmittelbar mit der Welle (3) verklebt sind und die Klebefläche (K1, K2) durch ineinandergreifende rohrförmige Abschnitte (6, 7) der Zahnräder (1, 2) vergrößert wird.

5. Klebeverbindung nach Anspruch 4, dadurch **gekennzeichnet,** daß ein Teil der Klebefläche (K1) auf verschieden großen Durchmessern (D1, D2) der Welle (3) liegt.

6. Klebeverbindung nach mindestens einem der vorhergehenden Ansprüche 1 bis 5, dadurch **gekennzeichnet**, daß die Maschinenelemente (1, 2, 3) mit Übergangspassungen zusammengefügt sind.

## Claims

1. Adhesive connection between at least three machine elements (1, 2, 3), in particular a non-rotatable connection of two gear wheels (1, 2) to a shaft (3), characterized in that two gear wheels (1, 2) and a shaft (3) are involved in the adhesive connection, the sum of the involved adhesive surfaces (K1, K2) being greater than the direct contact surface between the shaft (3) and at least one gear wheel (1 or 2).

2. Adhesive connection according to claim 1, characterized in that one of the adhesive surfaces (K2) is formed by tubular portions of the gear wheels (1, 2) which engage one into the other.

3. Adhesive connection according to claim 1, characterized in that a gear wheel (1) bonded to the shaft (3) has a tubular portion (6), to which the other gear wheel (2) is bonded.

4. Adhesive connection according to claims 1 and 2, characterized in that both gear wheels (1, 2) are bonded directly to the shaft (3) and the adhesive surface (K1, K2) is enlarged by tubular portions (6, 7) of the gear wheels (1, 2) which engage one into the other.

5. Adhesive connection according to claim 4, characterized in that part of the adhesive surface (K1) lies on differently sized diameters (D1, D2) of the shaft (3).

6. Adhesive connection according to at least one of the preceding claims 1 to 5, characterized in that the machine elements (1, 2, 3) are connected with transition fits.

## Revendications

1. Assemblage collé entre au moins trois éléments de machine (1, 2, 3), notamment un assemblage solidaire en rotation entre deux roues dentées (1, 2) et un arbre (3), **caractérisé** en ce que deux roues dentées (1, 2) et un arbre (3) contribuent à cet assemblage, la somme des surfaces de collage (K1, K2) concernées étant supérieure à la surface de contact direct de l'arbre (3) avec au moins une des roues dentées (1 resp. 2).

2. Assemblage selon la revendication 1, **caractérisé** en ce que l'une des surface de collage (K2) est constituée de sections tubulaires des roues dentées (1, 2) qui s'interpénètrent.

3. Assemblage selon la revendication 1, **caractérisé** en ce que l'une des roues dentées (1) collée à l'arbre (3) présente une section (6) tubulaire, à laquelle est collée l'autre roue dentée (2).

4. Assemblage selon les revendications 1 et 2, **caractérisé** en ce que les deux roues dentées (1, 2) sont toutes deux collées à l'arbre (3) et en ce que les surfaces de collage (K1, K2) sont augmentées par les sections (6, 7) tubulaires des roues qui s'interpénètrent.

5. Assemblage selon la revendication 4, **caractérisé** en ce qu'une partie de la surface de collage (K1) s'étend sur des zones de diamètres différents (D1, D2) de l'arbre (3).

6. Assemblage selon au moins une des revendications précédentes 1 à 5, **caractérisé** en ce que les éléments de machine (1, 2, 3) sont assemblées avec du jeu.
